(19) Europäisches Patentamt
European Patent Office
Office européen des brevets

(11) **EP 1 626 932 B1**

(12) **FASCICULE DE BREVET EUROPEEN**

(45) Date de publication et mention
de la délivrance du brevet:
**18.01.2017 Bulletin 2017/03**

(51) Int Cl.:
**C01G 23/053** *(2006.01)*    **C01G 23/02** *(2006.01)*
**B01J 27/135** *(2006.01)*    **B01J 35/00** *(2006.01)*
**B82Y 30/00** *(2011.01)*

(21) Numéro de dépôt: **04742604.4**

(22) Date de dépôt: **29.04.2004**

(86) Numéro de dépôt international:
**PCT/FR2004/001038**

(87) Numéro de publication internationale:
**WO 2004/101436 (25.11.2004 Gazette 2004/48)**

(54) **AQUO-OXO CHLORURE DE TITANE, PROCEDE POUR SA PREPARATION**

AQUA-OXO CHLOROTITANAT, VERFAHREN ZUR HERSTELLUNG

TITANIUM AQUO-OXO CHLORIDE AND PREPARATION METHOD THEREOF

(84) Etats contractants désignés:
**AT BE BG CH CY CZ DE DK EE ES FI FR GB GR HU IE IT LI LU MC NL PL PT RO SE SI SK TR**

(30) Priorité: **09.05.2003 FR 0305619**

(43) Date de publication de la demande:
**22.02.2006 Bulletin 2006/08**

(73) Titulaire: **Centre National de la Recherche Scientifique**
**75016 Paris (FR)**

(72) Inventeurs:
• **BROHAN, Luc**
  **44240 La Chapelle Sur Erdre (FR)**
• **SUTRISNO, Hari,**
  **Faculty of Science**
  **Karangmalang,**
  **55281 Yogyakarta (ID)**
• **PUZENAT, Eric**
  **F-69006 Lyon (FR)**
• **ROUET, Annabelle**
  **F-85000 La Roche Sur Yon (FR)**
• **TERRISSE, Hèlène**
  **F-44300 Nantes (FR)**

(74) Mandataire: **Lavoix**
  **2, place d'Estienne d'Orves**
  **75441 Paris Cedex 09 (FR)**

(56) Documents cités:
• **M.G. REICHMANN, F.J. HOLLANDER, A.T. BELL: "Structure of [Ti8O12(H2O)24]Cl8.HCl.7H2O" ACTA CRYST., vol. C43, 1987, pages 1681-1683, XP002271551 cité dans la demande**
• **M.G. REICHMANN, A.T. BELL: "Raman Study of the Preparation of SiO2-supported TiO2 from TiCl4 and HCl." LANGMUIR, vol. 3, 1987, pages 111-116, XP002271552**
• **KIM, SUN-JAE ET AL: "Homogeneous precipitation of TiO2 ultrafine powders from aqueous TiOCl2 solution" JOURNAL OF THE AMERICAN CERAMIC SOCIETY, vol. 82, no. 4, 1999, pages 927-932, XP002271553**

**Description**

La présente invention concerne un aquo-oxo chlorure de titane, un procédé pour sa préparation, ainsi que diverses applications.

La photocatalyse hétérogène à l'aide de dioxyde de titane sur support est une technique d'oxydation avancée qui trouve des applications notamment dans la dépollution de l'eau et de l'air. Elle repose sur la transformation de molécules à la surface du dioxyde de titane sous l'action d'un rayonnement UV et en présence d'oxygène et d'eau, qui peut conduire à une dégradation totale en éléments simples tels $CO_2$, $H_2O$, $NO_3^-$. L'efficacité du photocatalyseur dépend de ses propriétés physico-chimiques, sa forme allotropique, sa surface spécifique ou son acidité de surface. L'utilisation du photocatalyseur déposé sur un support permet d'éviter les étapes de filtration pour récupérer le photocatalyseur dans le cas de la dépollution de l'eau ou pour optimiser le contact entre les effluents pollués et le photocatalyseur dans le cas de la dépollution de l'air. Les supports utilisés pour les catalyseurs sont variés. On peut citer les oxydes (par exemple $SiO_2$ ou $Al_2O_3$) pulvérulents fibreux ou massifs, les celluloses fibreuses (papiers), les polymères synthétiques et le verre. Une couche de $TiO_2$ peut être déposée sur un support par un procédé sol-gel, dans lequel on utilise directement une poudre de dioxyde de titane mise en suspension, ou un précurseur tel que le tétrachlorure de titane ou un alcoxyde de titane qui se transforme en dioxyde de titane après un traitement thermique. Selon la source de dioxyde de titane, le dépôt peut être effectué par la technique de trempage-retrait (dip-coating), par pulvérisation (spray-coating) ou par dépôt en phase vapeur (Chemical Vapor Deposition). L'adhérence de l'oxyde de titane pulvérulent au support est obtenue par l'emploi d'alcoxydes de silicium et/ou de titane sous forme polymérique.

Les films de $TiO_2$ déposés par voie sol-gel présentent des inconvénients majeurs vis-à-vis de l'abrasion et/ou de la résistance à la corrosion des couches. Ils sont difficiles à obtenir sous forme de revêtements épais (>1 $\mu$m) sans craquelure. Les films sont généralement assez fragiles et ils ont une faible résistance à l'abrasion. En outre, il existe généralement un effet opposé entre l'adhérence du $TiO_2$ au support et l'activité photocatalytique spécifique du $TiO_2$. Des températures relativement élevées sont nécessaires pour obtenir $TiO_2$ et atteindre de bonnes propriétés (T = 350, 450°C), mais dans cette gamme de température, on observe une diffusion des ions $Na^+$ contenus dans le verre utilisé comme substrat vers la couche de $TiO_2$. Cette diffusion est néfaste pour l'activité photocatalytique, car les ions $Na^+$ favorisent la recombinaison des paires électron-trou, et il est donc nécessaire d'interposer une couche barrière, ce qui introduit un surcoût.

Reichmann, et al., [Acta Cryst. (1987), C43, 1681-1683] ont identifié, dans le produit formé par la réaction spontanée de $TiCl_4$ avec l'humidité de l'air, un composé dont la formule déduite de l'analyse par diffraction de RX sur monocristal est $[Ti_8O_{12}(H_2O)_{24}]Cl_8$, HCl, $7H_2O$. Cet oxychlorure se présente sous forme de petits cristaux incolores et irréguliers placés au milieu d'un amas de poudre. De petits cristaux irréguliers ont été isolés du centre des agglomérats et soumis à diverses analyses. La stoechiométrie de ces cristaux correspond à $[Ti_8O_{12}(H_2O)_{24}]Cl_8 \cdot HCl_8 \cdot 7H_2O$, et la structure est construite à partir d'un octamère de titane cubique. Les données relatives à ce composé sont publiées dans la fiche PDF (Powder Diffraction File) 01-078-1628 diffusée par International Centre for Diffraction Date (ICDD) sur le site www.icdd.com. Les paramètres de la maille monoclinique sont les suivants : a = 20,30580 (20) Å, b = 11,71720 (18) Å, c = 25,39840 (15) Å, $\beta$ = 117,201 (6)°, et le groupe de symétrie C2/c. Cependant, la présence de nombreuses molécules d'eau dont les facteurs d'occupation ne sont pas des nombres entiers traduit une distribution de composition et/ou un désordre associé à une mauvaise qualité des cristallites.

Les interactions entre surfaces et les propriétés des interfaces pouvant conditionner les performances des matériaux, le but de la présente invention est de fournir un nouveau procédé de préparation d'un précurseur d'oxyde de titane adapté à la fabrication des dispositifs dans lesquels l'oxyde de titane est sous forme de film sur un substrat, notamment pour la photocatalyse ou pour l'élaboration d'éléments semi-conducteurs.

C'est pourquoi la présente invention a pour objet un procédé de préparation d'aquo-oxo chlorure de titane, l'aquo-oxo chlorure de titane obtenu, ainsi que ses applications.

Le procédé de préparation d'aquo-oxo chlorure de titane selon l'invention consiste à hydrolyser $TiOCl_2$ soit dans une atmosphère dont le taux d'humidité est maintenu entre 50 et 60%, soit par un carbonate alcalin $A_2CO_3$, pour obtenir un aquo-oxo chlorure de titane, désigné ci-après par "$Ti_8O_{12}$".

Le composé $TiOCl_2$ étant très hygroscopique, il est utilisé en solution dans une solution aqueuse concentrée en acide chlorhydrique, c'est-à-dire sous forme d'une solution aqueuse $TiOCl_2 \cdot yHCl$. La concentration en HCl de la solution est avantageusement d'environ 2 M. La concentration en $TiOCl_2$ dans cette solution est de préférence entre 4 M et 5,5 M. Des solutions commerciales de $TiOCl_2$ 4,3 M ou 5 M dans une solution concentrée de HCl sont disponibles. Le composé $TiOCl_2 \cdot yHCl$ est désigné ci-après par "$TiOCl_2$".

Pour hydrolyser le composé "$TiOCl_2$" par maintien dans une atmosphère ayant un taux d'humidité de 50 à 60%, il est particulièrement intéressant de placer une solution de "$TiOCl_2$" à température ambiante au dessus d'un mélange $H_2SO_4/H_2O$ dans des quantités respectives telles que l'humidité relative est de l'ordre de 50 à 60% et de laisser en contact pendant environ 5 semaines. La conversion se fait selon le schéma réactionnel suivant :

$$8 \text{ "TiOCl}_2\text{"} + 35 \text{ H}_2\text{O} \rightarrow \text{"Ti}_8\text{O}_{12}\text{"} + 7 \text{ HCl}$$

L'acide sulfurique présent dans le milieu réactionnel permet d'éliminer HCl qui se forme.

Lorsque l'hydrolyse est effectuée par un carbonate, on met en présence à température ambiante une solution de "TiOCl$_2$" et un carbonate alcalin $A_2CO_3$ dans des quantités respectives telles que le rapport Ti/A = 4 ± 0,5, de préférence 4 ± 0,1, et on laisse en contact pendant 48 à 72 heures. La conversion se fait selon le schéma réactionnel suivant :

$$8 \text{ "TiOCl}_2\text{"} + 35 \text{ H}_2\text{O} + A_2CO_3 \rightarrow \text{"Ti}_8\text{O}_{12}\text{"} + 5 \text{ HCl} + CO_2 \text{ (g)} + 2 \text{ ACl}$$

Le composé "Ti$_8$O$_{12}$" est obtenu sous forme de cristaux par le procédé de l'invention. Il a la composition massique suivante : Ti 26,91%, Cl 21,36%, H 4,41%, qui correspond à la formule [Ti$_8$O$_{12}$(H$_2$O)$_{24}$]Cl$_8$•HCl•7H$_2$O de l'aquo-oxo chlorure de titane, désigné ci-après par "Ti$_8$O$_{12}$".

Ledit composé a une structure monoclinique. Les paramètres de la maille monoclinique sont les suivants : a = 20, 3152 (11) Å, b = 11,718(7) Å, c = 24,2606(16) Å, $\beta$ = 111,136(7)°, et le groupe de symétrie est Cc.

Le composé "Ti$_8$O$_{12}$" est soluble dans les solvants polaires, tels que par exemple l'eau, le méthanol, l'éthanol, etc. Il peut être conservé sous forme "Ti$_8$O$_{12}$" dans ces solutions en maintenant le pH à une valeur inférieure à 2, ce qui stabilise le cation [Ti$_8$O$_{12}$ (H$_2$O)$_{24}$]$^{8+}$.

Des particules monodisperses de "Ti$_8$O$_{12}$" dans un solvant polaire peuvent être obtenues en 24 heures en ajustant la force ionique de la solution à une valeur comprise entre 10$^{-2}$ et 10$^{-3}$ en Cl$^-$. Un exemple de réalisation consiste à introduire dans un solvant polaire, une quantité de "Ti$_8$O$_{12}$" telle que la concentration en titane [Ti] soit par exemple 0,1 M, et une quantité de chlorure de métal alcalin telle que la concentration en chlorure [Cl$^-$] soit comprise entre 10$^{-2}$ M et 10$^{-3}$ M. Dans ces solutions, l'addition d'ions chlorure favorise la dissociation des cristaux de "Ti$_8$O$_{12}$" et la dispersion des clusters dans le solvant polaire, du fait que les ions Cl- entourent le polycation [Ti$_8$O$_{12}$ (H$_2$O)$_{24}$]$^{8+}$.

Les solutions ainsi obtenues peuvent être utilisées pour le dépôt de couches minces formées de cristaux sur un substrat. Le dépôt peut être effectué par les techniques de trempage-retrait, de pulvérisation ou de dépôt en phase vapeur pour tous les types de substrat, par exemple un substrat de verre, ou par électrodéposition lorsque le substrat est un métallique. Les couches ainsi obtenues ont une excellente adhérence aux supports basiques en raison de l'interaction chimique acido-basique entre le polycation chargé positivement [Ti$_8$O$_{12}$(H$_2$O)$_{24}$]$^{8+}$ et le support basique, par exemple le verre.

Les solutions de "Ti$_8$O$_{12}$" peuvent en outre être utilisées pour la préparation in situ à température ambiante des formes habituelles de TiO$_2$, mais aussi de nouvelles variétés dont la dimensionnalité des réseaux et la taille des particules sont contrôlées. Par un contrôle précis du pH et le choix du solvant de la solution contenant le composé "Ti$_8$O$_{12}$", d'autres formes polycondensées (1D, 2D, 3D) d'oxyde de titane peuvent être préparées. Ainsi que mentionné précédemment, le maintien d'une solution de "Ti$_8$O$_{12}$" dans un solvant polaire à un pH<2 conserve "Ti$_8$O$_{12}$" sous forme de l'aquo-oxo chlorure de titane du fait que le polycation [Ti$_8$O$_{12}$(H$_2$O)$_{24}$]$^{8-}$ est stabilisé. Dans une solution de "Ti$_8$O$_{12}$" portée à un pH entre 2 et 3, l'aquo-oxo chlorure de titane subit un début d'hydrolyse et forme un polymère. Lorsque le pH de la solution est entre 4 et 6, c'est-à-dire lorsque la solution tend vers le point de charge nulle, l'aquo-oxo chlorure de titane est hydrolysé pour former des solides 3D. Les particules les plus chargées sont les plus stables et la cinétique de polycondensation est d'autant plus rapide que l'on s'approche du point de charge nulle. Pour ralentir la cinétique, on utilise des solvants dont les constantes diélectriques sont plus faibles ($\varepsilon_{H_2O}$ = 78,5 ; $\varepsilon_{Ethanol}$ = 24,3). Le pH d'une solution alcoolique peut être diminué par exemple par addition d'hydroxyde de tétraméthylammonium (TMAOH).

Le produit "Ti$_8$O$_{12}$" obtenu par le procédé proposé est utile notamment comme élément semi-conducteur d'une cellule photovoltaïque. Un autre objet de la présente invention est constitué par une cellule photovoltaïque dans laquelle l'élément semi-conducteur est constitué par un aquo-oxo chlorure de titane susceptible d'être obtenu par le procédé selon la présente invention.

Le produit susceptible d'être obtenu par le procédé selon l'invention est en outre utile comme photocatalyseur dans les traitements de purification de l'air ou de l'eau. L'invention a donc pour autre objet un procédé de purification photocatalytique de l'air dans lequel le catalyseur est un aquo-oxo chlorure de titane susceptible d'être obtenu par le procédé selon la présente invention sur support, et un procédé de purification photocatalytique d'effluents aqueux dans lequel le catalyseur est un aquo-oxo chlorure de titane susceptible d'être obtenu par le procédé selon l'invention sur support. Pour cette application, il est particulièrement préféré d'utiliser des solutions monodisperses dans lesquelles le diamètre des particules est voisin de 2 nm, (OD), ce qui augmente de façon considérable la surface spécifique.

La présente invention est décrite plus en détail par les exemples donnés ci-après, auxquels elle n'est cependant pas limitée.

Les supports utilisés pour les dépôts de couches de "Ti$_8$O$_{12}$" sont des plaques de verre nettoyées au préalable à l'aide d'une solution de RBS diluée à 2% dans l'eau pure. La solution de RBS, commercialisée par la société Saint Gobain, est une solution alcaline contenant des éléments tensioactifs anioniques, des phosphates, des hydrates et des agents chlorés.

**Exemple 1**

Préparation de" Ti$_8$O$_{12}$"

On a placé à température ambiante, quelques millilitres d'une solution aqueuse de TiOCl$_2$•yHCl (5,5 M) dans un dessiccateur contenant 500 ml d'un mélange H$_2$SO$_4$/H$_2$O afin de contrôler l'humidité relative. Après plusieurs jours, des cristaux transparents, dont la taille varie entre le millimètre et le centimètre, se sont formés. Les cristaux obtenus sont conservés dans des récipients étanches pour éviter toute dégradation.

Analyse chimique

L'analyse chimique a donné la composition massique suivante : Ti 26,91%, Cl 21,36%, H 4,41%. Elle correspond à la formulation [Ti$_8$O$_{12}$(H$_2$O)$_{24}$]Cl$_8$•HCl•7H$_2$O de l'aquo-oxo chlorure de titane.

Analyse par diffraction des rayons X

Le composé obtenu a été séché et la poudre obtenue a été soumise à une analyse par diffraction des RX. L'analyse du DRX obtenu a été conduite à l'aide d'une maille monoclinique centrée C, déterminée pour un composé de formulation [Ti$_8$O$_{12}$(H$_2$O)$_{24}$]Cl$_8$•HCl•7H$_2$O par Reichmann et coll, précités. La position des raies de diffraction et leurs intensités intégrées ont été déterminées grâce au programme PROLIX mis au point par J. M. Barbet, P. Deniard et R. Brec, ("PROLIX", Treatment of Inel X-ray Curve Detector Powder Diffraction Data : Chains Program and Experimental Results*). L'affinement des paramètres cristallins a été réalisé à l'aide du programme U-FIT décrit par M. Evain, ["U-FIT", A Cell Parameter Program, IMN-Nantes (1992)].

Si l'on excepte c et β, les paramètres de maille affinés [a = 20,305(7) Å, b = 11,716(6) Å, c = 25,390(4) Å et β = 115,001(8)°] sont en bon accord avec ceux obtenus par diffraction sur monocristal [a = 20, 3152(11) Å, b = 11,718(7) Å, c = 24,2606(16) Å et β = 111,136(7)°]. Les écarts enregistrés résulte d'un choix de maille sensiblement différent entre l'affinement sur poudre et sur monocristal.

Les facteurs caractéristiques de l'affinement sont l'écart moyen D entre 2θ$_{obs}$ et 2θ$_{calc}$, soit

$$D = \frac{1}{n_{hkl}} \sum |d(2\theta)| = 0{,}0108° \quad \text{et R, le facteur de confiance donné par la relation suivante :}$$

$$R = \frac{1}{n_{hkl} - n_{var}} \sum (2\theta obs - 2\theta calc)^2 = 0{,}0139° \quad, \quad \text{où } n_{hkl} \text{ est le nombre de réflexions prises en compte, et } n_{var} \text{ le nombre de variables affinées.}$$

L'analyse du DRX montre que l'obtention de «Ti$_8$O$_{12}$» est quantitative, aucune raie parasite n'étant identifiée. Les indexations et intensités relatives des raies de diffraction sont regroupées dans le tableau suivant.

| hkl | 2θ$_{obs}$ (°) | 2θ$_{calc}$ (°) | Intensité I/I$_o$ |
|---|---|---|---|
| 0 0 2 | 7,820 | 7,810 | 100 |
| 1 1 0 | 8,987 | 8,982 | 85 |
| -2 0 2 | 9,348 | 9,338 | 34 |
| 2 0 0 | 9,790 | 9,773 | 12 |
| -1 1 2 | 10,349 | 10,350 | 43 |
| 1 1 2 | 13,319 | 1 3,296 | 1 |
| 0 0 4 | 15,650 | 15,656 | 6 |
| -1 1 4 | 16,022 | 16,019 | 3 |
| 0 2 2 | 17,054 | 17,023 | 3 |
| 2 2 -1 | 17,477 | 17,465 | 19 |
| 2 2 -2 | 17,793 | 17,785 | 7 |
| 2 2 0 | 18,006 | 18,019 | 4 |
| 2 2 -3 | 18,963 | 18,936 | 4 |
| 4 0 0 | 19,649 | 19,617 | 5 |
| 3 1 -5 | 19,918 | 19,906 | 4 |
| 3 1 2 | 20,984 | 20,990 | 21 |
| 1 3 -1 | 23,242 | 23,223 | 74 |
| 1 1 5 | 23,557 | 23,566 | 89 |

(suite)

| hkl | $2\theta_{obs}$ (°) | $2\theta_{calc}$ (°) | Intensité $I/I_o$ |
|---|---|---|---|
| 1 3 -2 | 23,846 | 2 3,843 | 34 |
| 0 2 5 | 24,820 | 24,839 | 8 |
| 1 3 -3 | 25,070 | 25,083 | 28 |
| 5 1 0 | 25,765 | 25,753 | 15 |
| 1 3 -4 | 26,872 | 26,862 | 78 |
| 3 3 1 | 28,437 | 28,427 | 17 |
| 1 3 -5 | 29,091 | 29,089 | 5 |
| 2 0 6 | 29,515 | 29,493 | 2 |
| 0 4 0 | 30,461 | 30,475 | 6 |
| 1 1 -8 | 30,665 | 30,638 | 5 |
| 3 3 -6 | 31,379 | 31,398 | 4 |
| 0 0 8 | 31,617 | 31,614 | 6 |
| 7 1 -3 | 32,013 | 32,000 | 11 |
| 3 1 -9 | 32,645 | 32,648 | 5 |
| 3 1 6 | 34,120 | 34,123 | 4 |
| 5 3 1 | 35,320 | 35,302 | 12 |
| 8 0 -6 | 35,830 | 35,830 | 4 |
| 0 4 5 | 36,490 | 36,498 | 6 |
| 5 3 2 | 37,265 | 37,251 | 9 |
| 1 3 -8 | 37,695 | 37,690 | 17 |
| 5 3 -8 | 37,980 | 37,951 | 5 |
| 4 2 -10 | 38,655 | 38,658 | 10 |
| 1 1 9 | 39,108 | 39,084 | 3 |
| 3 5 -3 | 41,057 | 41,034 | 3 |
| 8 0 -10 | 41,712 | 41,700 | 1 |
| 2 4 -8 | 42,191 | 42,177 | 3 |
| 3 3 -10 | 42,567 | 42,543 | 1 |
| 4 2 7 | 43,942 | 43,940 | 4 |
| 2 0 -12 | 44,384 | 44,374 | 8 |
| 6 2 5 | 45,738 | 45,742 | 3 |
| 5 5 -6 | 46,465 | 46,451 | 7 |
| 9 3 -4 | 46,648 | 46,673 | 4 |
| 10 0 -2 | 47,124 | 47,107 | 10 |
| 3 1 -13 | 47,971 | 47,967 | 10 |
| 1 3 -11 | 48,143 | 48,159 | 7 |
| 4 4 6 | 48,935 | 48,919 | 1 |
| 7 3 -12 | 50,803 | 50,813 | 5 |
| 5 5 -9 | 51,403 | 51,381 | 1 |
| 7 1 -14 | 51,920 | 51,887 | 3 |
| 9 1 3 | 52,738 | 52,731 | 11 |
| 12 0 -9 | 54,938 | 54,955 | 1 |
| 1 5 9 | 55,332 | 55,320 | 5 |
| 1 3 -13 | 55,889 | 55,873 | 2 |
| 8 4 3 | 56,943 | 56,934 | 4 |

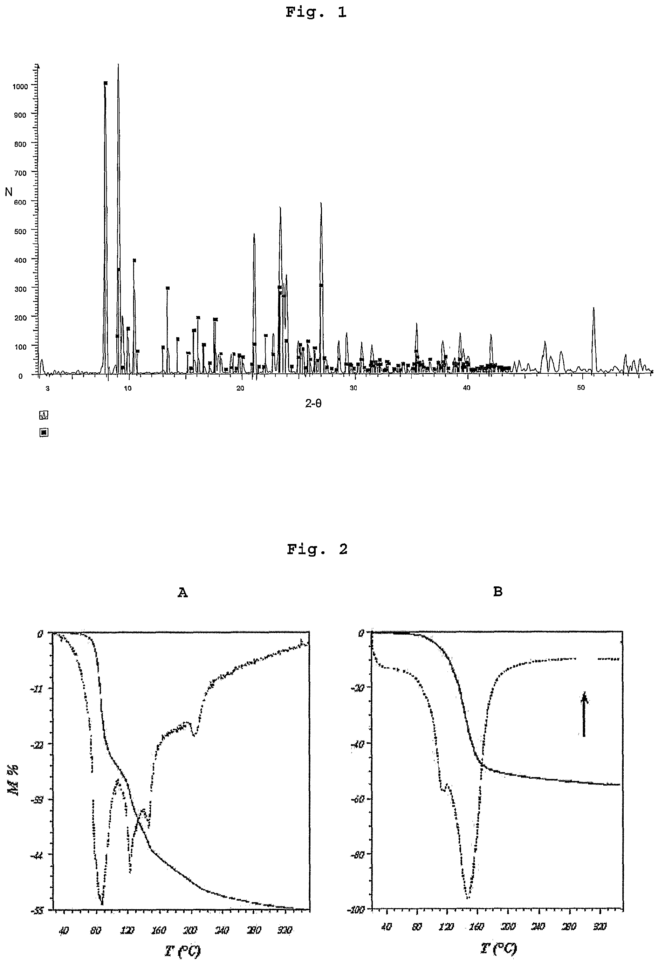

La figure 1 représente le diagramme de diffraction du composé du présent exemple, superposé au diagramme théorique obtenu à partir des données de la fiche PDF n° 01-078-1628 (correspondant au composé décrit par Reichmann, et al., précité). Dans le diagramme théorique, les raies sont matérialisées par un simple trait vertical surmonté d'un carré. Il apparaît que les intensités des raies présentent des différences substantielles.

<u>Analyse thermique</u>

Le comportement thermique d'échantillons séchés à température ambiante a été étudié par thermogravimétrie (TG) couplée à la calorimétrie différentielle à balayage (Differential Scanning Calorimetry, DSC).

Les analyses TG et DSC sont effectuées à l'aide d'un appareil SETARAM TG-DSC 111, sur des échantillons d'environ 20 mg, chauffés à une vitesse de 5 K/min ou 2 K/min, sous un flux d'argon. L'identification des gaz dégagés au cours du traitement thermique se fait grâce à un appareil LEYBOLD H300CIS.

La figure 2 représente les courbes de thermogravimétrie (en trait plein) et les courbes de calorimétrie différentielle à balayage (en pointillé) de la phase «$Ti_8O_{12}$», enregistrées sous argon à une vitesse chauffage de 2 K/min (courbes 2A) et 5 K/min (courbes 2B). La perte de masse M (en %) est indiquée en ordonnée, en fonction de la température T (en °C) indiquée en abscisse.

Le produit final pulvérulent obtenu à 400°C, correspond à la variété anatase de $TiO_2$, identifiée à partir de son diagramme X de poudre. La réaction de thermohydrolyse, observée aux environs de 150°C (figure 2B), se manifeste sur les courbes TG/DSC par deux pics endothermiques intenses situés à 110°C et 148°C accompagnés d'une rapide perte de masse. La perte de masse expérimentale (55%) est comparable à celle attendue (56%).

Une analyse thermogravimétrique différentielle (DTG) a été effectuée afin de découpler les événements cinétiques de ceux thermodynamiquement contrôlés. L'expérience a consisté, après avoir fixé une rampe de température, à asservir celle-ci à la perte de masse au-delà d'un certain seuil de sorte que la vitesse de montée en température diminue lorsque la perte de masse augmente. Le profil du thermogramme se trouve alors notablement modifié puisqu'il permet de différencier quatre quasi-plateaux (fig. 2A) suggérant l'existence d'intermédiaires réactionnels. Entre chaque plateau les pertes de masse valent successivement 28%, 14%, 7% et 6%.

## Exemple 2

<u>Préparation de "$Ti_8O_{12}$"</u>

On a ajouté du carbonate de sodium à une solution aqueuse 5,5 M de $TiOCl_2 \cdot yHCl$ dans des proportions telles que le rapport molaire Ti/Ca soit égal à 4, puis on a introduit le mélange dans une boîte de Pétri placée à température ambiante. On a constaté la formation de cristaux transparents après 48 heures. Les cristaux ont été récupérés comme dans l'exemple 1, puis conservés dans un récipient étanche.

## Exemple 3

<u>Préparation</u> d'une solution de "$Ti_8O_{12}$"

On a préparé une solution aqueuse de "$Ti_8O_{12}$" dont la concentration en titane [Ti] est de 0,1 M, en introduisant 1,8172 g de "$Ti_8O_{12}$" préparé selon le mode opératoire de l'exemple 1 dans 100 ml d'eau ultrapure. Une fraction de la solution obtenue a été diluée dix fois, pour obtenir une solution dans laquelle la concentration en titane est de 0,01 M.

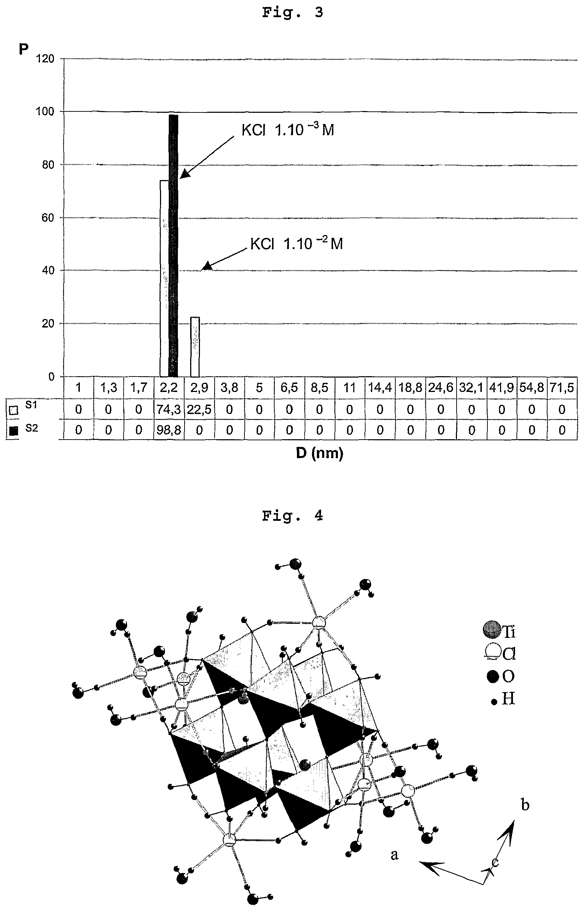

Afin de tester l'influence de la force ionique sur la taille des particules de "$Ti_8O_{12}$" en solution, des quantités variables de KCl pulvérulent ont été ajoutées. Ces quantités correspondent à l'obtention de solutions dont la concentration en KCl, notée [Cl$^-$], est respectivement $10^{-1}$, $10^{-2}$, $10^{-3}$ et $10^{-4}$ M. Les diamètres hydrodynamiques des particules ont été mesurés par spectroscopie de corrélation de photons à l'aide d'un équipement Beckman-Coulter N4 plus. Des solutions polydisperses dans lesquelles les tailles de particules sont distribuées dans plusieurs classes sont obtenues pour [Ti] = 0,1 M, et [Cl$^-$] = $10^{-1}$ ou $10^{-4}$ M. Des solutions monodisperses sont obtenues pour [Ti] = 0,1 M, et [Cl$^-$] = $10^{-2}$ ou $10^{-3}$ M. Les diamètres hydrodynamiques pour les solutions monodisperses sont indiqués sur la figure 3. Le diamètre hydrodynamique D (en nm) est indiqué en abscisse. Le pourcentage massique P est représenté en ordonnée et les valeurs correspondantes sont indiquées sur les lignes "S 1" et "S 2". La ligne S1 correspond à une concentration en KCl de $10^{-2}$ M et la ligne S2 correspond à une concentration en KCl de $10^{-3}$ M. Il apparaît que les diamètres sont centrés autour de 2,2 nm. Cette valeur est proche de celle déterminée à partir des données cristallographiques et correspond à un cluster de "$Ti_8O_{12}$" entouré d'atomes de chlore et de molécules d'eau tel que représenté sur la figure 4.

## Exemple 4

<u>Réalisation de dépôts de "$Ti_8O_{12}$" par trempage-retrait sur verre</u>

On a préparé dans un bécher une solution alcoolique de "$Ti_8O_{12}$" dont la concentration en titane est de 0,35 M, en introduisant 3,8161 g de "$Ti_8O_{12}$" dans 60 ml d'éthanol anhydre. Le bécher contenant la solution est placé sur un support dont la hauteur est ajustable. Une plaque de verre du type "lame porte-objet de microscope" fixée à l'aide d'une pince est maintenue verticalement au-dessus du bécher. Le dépôt est réalisé par la technique dite "du trempage retrait" ou "dip coating" qui consiste à tremper la plaque de verre dans la solution, puis à la retirer à vitesse constante. Après trempage, la plaque est séchée à l'air pendant environ 5 min. Cette opération est répétée 5 fois. La plaque est ensuite placée dans un four dans lequel elle subit un traitement thermique consistant à faire monter la température en 2 h jusqu'à 300°C, à maintenir cette température pendant 4 h, puis à laisser refroidir jusqu'à 20°C en 4 h.

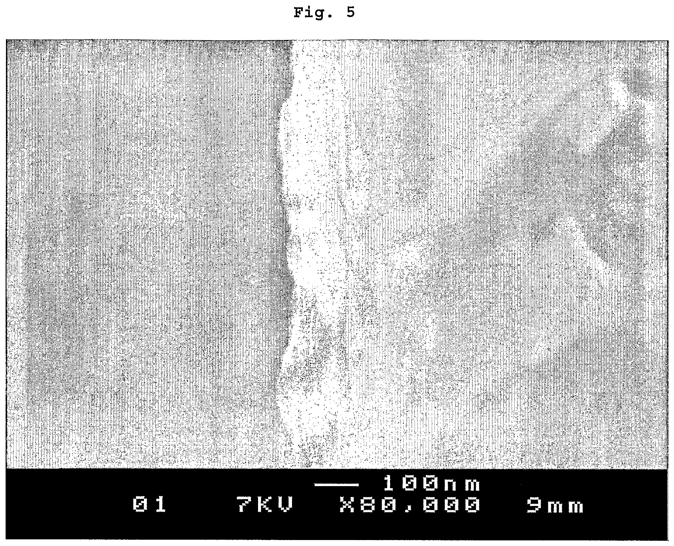

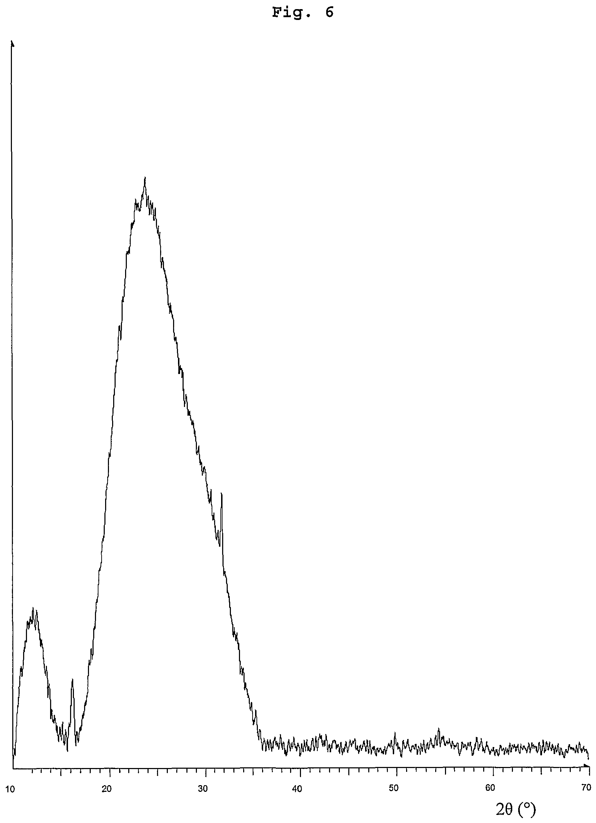

Le dépôt obtenu sur la plaque de verre se présente sous forme d'une couche homogène et transparente dont l'épaisseur, déterminée par microscopie électronique à balayage (MEB), est de 100 nm. La figure 5 représente l'image MEB d'une coupe transversale du dépôt. Le diagramme de diffraction X du dépôt, représenté sur la figure 6 présente deux larges massifs situés autour de 12,7° et 23,7° qui correspondent aux distances inter-réticulaires de "$Ti_8O_{12}$" amorphe et deux pics étroits à 16,1° et 31,8° attribuables à une phase cristallisée non identifiée. Compte tenu des hauteurs respectives des pics, la phase "$Ti_8O_{12}$" peut être considérée comme majoritaire. Les distances inter-réticulaires de cette phase non identifiée, calculées à partir des angles en $2\theta$ =16, 1° et 31, 8° par la relation $2d\sin\theta=n\lambda$, avec $\lambda$=1,5418 (Anticathode de cuivre), sont respectivement de 5,47 Å et de 2,82 Å.

**Exemple 5**

Réalisation de dépôts de "$Ti_8O_{12}$" par trempage-retrait sur verre

On a préparé une solution alcoolique de "$Ti_8O_{12}$", dont la concentration en titane est de 0,1 M, en introduisant 1,8172 g de "$Ti_8O_{12}$" dans 100 ml d'éthanol anhydre. Les dépôts sont réalisés selon la méthode dite du "trempage-retrait" décrite dans l'exemple 4. Après chaque dépôt, la plaque de verre est séchée par un étuvage à 75°C. 5 dépôts ont ainsi été réalisés sur chaque plaque. Afin de tester l'influence d'un traitement thermique sur la structure des dépôts, les plaques de verre ont subi les programmes de température suivants :

| Echantillon N° | Traitement thermique | | |
|---|---|---|---|
| | Température °C | Vitesse de montée (°C/min) | Durée (heure) |
| 1 | 75 | étuve | 1h 30 |
| 2 | 75 | 2 | 3 |
| | 155 | 2 | 4 |
| 3 | 75 | 2 | 4 |
| | 155 | 2 | 4 |
| | 200 | 2 | 4 |
| 4 | 75 | 2 | 4 |
| | 155 | 2 | 4 |
| | 200 | 2 | 4 |
| | 255 | 2 | 4 |
| 5 | 75 | 2 | 4 |
| | 155 | 2 | 4 |
| | 200 | 2 | 4 |
| | 255 | 2 | 4 |
| | 420 | 2 | 4 |

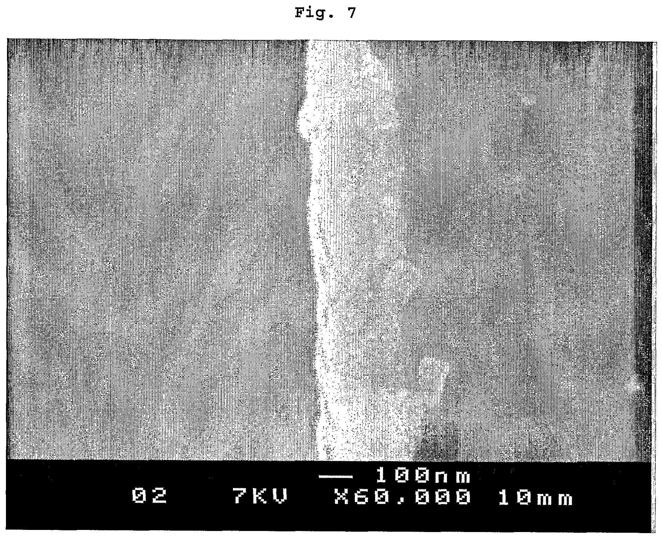

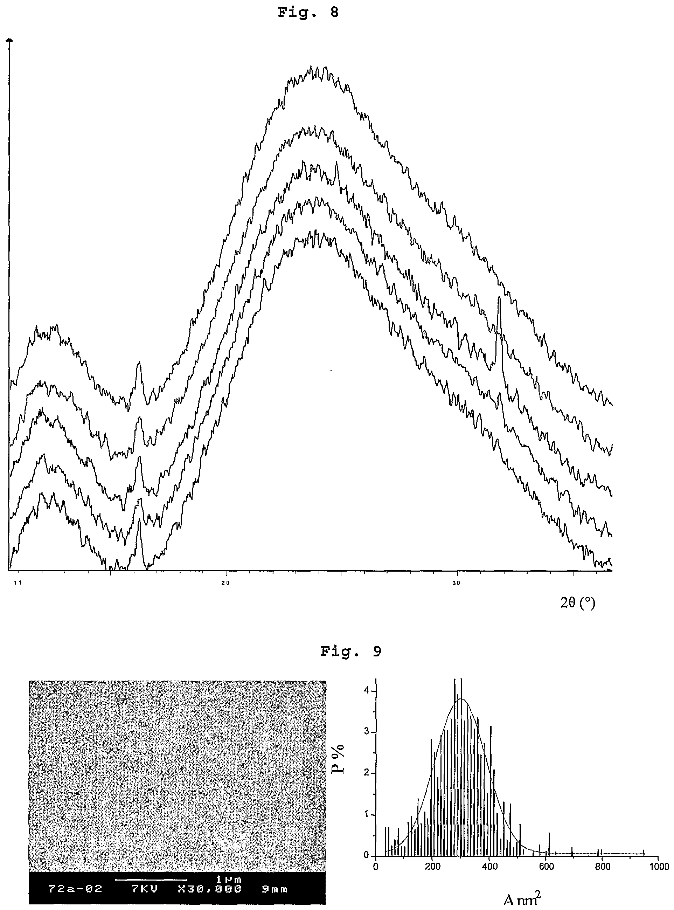

Le dépôt obtenu sur la plaque de verre a une épaisseur, déterminée par MEB, de 200-250 nm. Sur la figure 7, qui représente l'image MEB d'une coupe transversale du dépôt correspondant à l'échantillon n° 3, la zone claire sensiblement verticale au milieu de la figure représente un gel de "$Ti_8O_{12}$", et la zone sombre à la droite de la figure représente le substrat de verre. Les diagrammes de diffraction de RX sont représentés sur la figure 8. Les courbes correspondent dans l'ordre aux traitements thermiques n° 1, n° 2, n° 3, n° 4 et n° 5, à partir du bas. Les diagrammes montrent les massifs situés autour de 12,7° et 23,7° qui correspondent aux distances inter-réticulaires de "$Ti_8O_{12}$", ainsi que les raies situées autour de 31,8° (pour les échantillons n° 2 et n° 3) et autour de 16,1° qui correspondent aux distances interréticulaires de 5,47 Å et de 2,82 Å caractéristiques de la phase inconnue obtenue également dans l'exemple 4.

### Exemple 6

Réalisation de dépôts de "$Ti_8O_{12}$" sur verre par spin coating

Dans un bécher contenant des cristaux de "$Ti_8O_{12}$" dissous dans 5 ml d'éthanol, on ajoute, goutte à goutte, à l'aide d'une burette, une solution alcoolique d'hydroxyde de tétraméthylammonium (TMAOH) dans le rapport molaire, R = Ti/TMAOH, tel que : $1,5 \leq R \leq 3$. Bien que l'addition de TMAOH soit interrompue avant l'apparition du précipité de dioxyde de titane $TiO_2$, la solution limpide évolue au cours du temps jusqu'à devenir visqueuse. Aussi, une partie du mélange en solution est déposée rapidement sur le verre par spin-coating". La répartition des dépôts par "spin-coating" se fait par rotation d'un faible volume de solution sur le verre, à vitesse, accélération et durée de rotation contrôlées.

Pour observer l'influence de R sur la taille des grains lors des dépôts sur verre par "spin coating", différentes solutions ont été utilisées. Les quantités de composés utilisées sont indiquées dans le tableau ci-dessous.

| "$Ti_8O_{12}$" (g) | TMAOH (g) | R = Ti/TMAOH |
|---|---|---|
| 0,500 | 0,3428 | 1, 5 |
| 0,500 | 0,2493 | 2 |
| 0,500 | 0,1558 | 3 |

La photographie MEB, présentée sur la partie gauche de la figure 9, illustre la taille des particules obtenue pour R = 1,5. L'histogramme de répartition de la surface des grains, sur lequel l'aire A en nm est en abscisse, est représenté sur la partie droite de la figure 9. On observe une très bonne homogénéité de la dispersion des particules conduisant à un taux de recouvrement de 8%, avec une surface moyenne de particule de l'ordre de 300 $nm^2$, soit un diamètre d'environ 17 nm. La taille des particules diminue lorsque le rapport Ti/TMAOH augmente, c'est-à-dire lorsque le pH de la solution alcoolique diminue. La réalisation de dépôts sur verre par "spin coating", pour des rapports Ti/TMAOH variables en milieu alcoolique, permet d'obtenir des particules monodisperses fortement adhérentes au support et dont les diamètres peuvent variées de 100 nm à 3 nm.

### Exemple 7

Electrodéposition de "$Ti_8O_{12}$" sur un support métallique

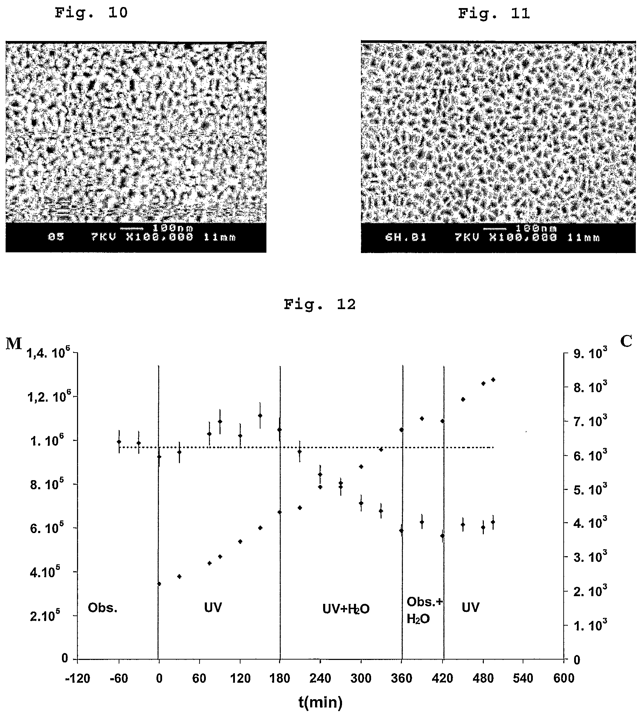

On a préparé une solution alcoolique de "$Ti_8O_{12}$" dont la concentration en titane est de 0,04 M, en introduisant 0,7269 g de "$Ti_8O_{12}$" dans 100 ml de méthanol anhydre. Une électrode, constituée par une membrane de type "glass fritt" Whatman de diamètre 25 mm (diamètre de pore 20 nm) recouverte d'une fine pellicule d'or par évaporation sous vide, a ensuite été polarisée à -0,5 V par rapport à une électrode de référence au calomel, pendant une heure. La quantité de courant passée correspond à 1300 Coulomb. L'analyse EDX au Microscope Electronique à Balayage (MEB) révèle un rapport proche Ti/Cl = 4 soit 80% en titane. L'image MEB représentée sur la figure 10 indiquent un dépôt relativement uniforme constitué d'un agglomérat de grains de diamètre 10 nm délimitant des pores d'environ 10 nm à 20 nm de diamètre. Compte tenu du rapport Ti/Cl = 4, 75% du titane est sous forme de $TiO_2$, le reste étant sous forme de "$Ti_8O_{12}$".

### Exemple 8

On a préparé une solution alcoolique de "$Ti_8O_{12}$" dont la concentration en titane est de 0,01 M, en introduisant 0,1817 g de "$Ti_8O_{12}$" dans 100 ml de méthanol anhydre. Une électrode, constituée par une membrane de type "glass fritt" Whatman de diamètre 25 mm (diamètre de pore 20 nm) recouverte d'une fine pellicule d'or par évaporation sous vide, a ensuite été polarisée à -0,2 V par rapport à une électrode de référence au calomel, pendant 6 heure. La quantité de courant passée correspond à 1750 Coulomb. L'analyse EDX au Microscope Electronique à Balayage (MEB) révèle un rapport proche Ti/Cl = 82/18. Compte tenu du rapport Ti/Cl 78% du titane est sous forme de $TiO_2$, le reste étant sous forme de "$Ti_8O_{12}$".

L'image de MEB représentée sur la figure 11 révèle la structure poreuse du dépôt.

### Exemple 9

L'activité photocatalytique du dépôt réalisé selon l'exemple 4 est mesurée à l'aide d'un test de dégradation du méthanol en phase gazeuse. Un volume de 6 mL d'air saturé en méthanol à 16,3°C, qui correspond à une concentration de 500 ppm, est introduit dans le réacteur à l'aide d'une seringue à gaz. L'ensemble est maintenu à l'obscurité pendant 2 à 3 h afin d'atteindre un équilibre, puis soumis à une irradiation UV ($\lambda$=360nm). On observe une diminution de la concentration de méthanol de 515 ppm à 440 ppm en 6 h ce qui correspond à une vitesse initiale de dégradation de 12,5 ppm h$^{-1}$.

Les résultats de l'activité photocatalytique du dépôt sont présentés sur la figure 12. Les points barrés d'un trait vertical représentent l'évolution en fonction du temps de la concentration en méthanol (valeur M en unités arbitraires sur l'axe de gauche) et les points non barrés représente l'évolution en fonction du temps de la concentration en $CO_2$ (valeur C en unités arbitraires sur l'axe de droite). Les différentes zones indiquées sur la figure correspondent aux paramètres testés. La zone notée "Obs" correspond à la mise en équilibre, les deux zones "UV" correspondent à l'irradiation UV, la zone "UV+$H_2O$" correspond à une irradiation UV et une injection de $H_2O$ la zone "Obs+$H_2O$" correspond à une mise en équilibre avec injection de $H_2O$.

**Revendications**

1. Procédé de préparation d'aquo-oxo chlorure de titane **caractérisé en ce qu'**il consiste à hydrolyser $TiOCl_2$ soit dans une atmosphère dont le taux d'humidité est maintenu entre 50 et 60%, soit par un carbonate alcalin $A_2CO_3$.

2. Procédé selon la revendication 1, **caractérisé en ce que** $TiOCl_2$ est sous forme d'une solution aqueuse $TiOCl_2$*yHCl.

3. Procédé selon la revendication 2, **caractérisé en ce que** la concentration en HCl de la solution est d'environ 2 M.

4. Procédé selon la revendication 2, **caractérisée en ce que** la concentration en $TiOCl_2$*yHCl est entre 4 M et 5,5 M.

5. Procédé selon la revendication 2, **caractérisée en ce que** la solution de $TiOCl_2$*yHCl est placée à température ambiante au dessus d'un mélange $H_2SO_4/H_2O$ dans des quantités respectives telles que l'humidité relative est de l'ordre de 50 à 60% et laissée en contact pendant environ 5 semaines.

6. Procédé selon la revendication 1, **caractérisée en ce que** l'on met en présence à température ambiante une solution $TiOCl_2$*yHCl et un carbonate alcalin $A_2CO_3$ dans des quantités respectives telles que le rapport Ti/A = $4\pm0,5$, et on laisse en contact pendant 48 à 72 heures.

7. Procédé selon la revendication 6, **caractérisé en ce que** Ti/A = $4\pm0,1$.

8. Aquo-oxo chlorure de titane susceptible d'être obtenu selon le procédé de la revendication 1 sous forme de cristaux, ayant la composition massique suivante : Ti 26,91%, Cl 21,36%, H 4,41%, qui correspond à la formule $[Ti_8O_{12}(H_2O)_{24}]Cl_8$*HCl*$7H_2O$, **caractérisé en ce qu'**il présente une structure monoclinique, des paramètres de la maille monoclinique a = 20,3152 (11) Å, b = 11,718 (7) Å, c = 24,2606(16) Å, $\beta$ = 111,136 (7) °, et le groupe de symétrie Cc.

9. Aquo-oxo chlorure de titane sous forme de cristaux selon la revendication 8, **caractérisé en ce qu'**il est formé de particules monodisperses dans un solvant polaire.

10. Aquo-oxo chlorure de titane selon la revendication 9, **caractérisé en ce que** lesdites particules ont un diamètre hydrodynamique centré autour de 2,2 nm.

11. Aquo-oxo chlorure de titane selon la revendication 8, **caractérisé en ce qu'**il est sous forme de film mince sur un substrat.

12. Aquo-oxo chlorure de titane selon la revendication 11, **caractérisé en ce que** le substrat est du verre.

13. Elément semi-conducteur, **caractérisé en ce qu'**il est constitué par un aquo-oxo chlorure de titane selon l'une des revendications 11 ou 12.

14. Procédé de purification de l'air par photocatalyse, **caractérisé en ce que** le catalyseur est un aquo-oxo chlorure de titane selon l'une des revendications 11 ou 12.

15. Procédé de purification de d'effluents aqueux par photocatalyse, **caractérisé en ce que** le catalyseur est un aquo-oxo chlorure de titane selon l'une des revendications 11 ou 12.

**Patentansprüche**

1.  Verfahren zur Herstellung von Titan-aquo-oxo-chlorid, **dadurch gekennzeichnet, dass** es darin besteht, $TiOCl_2$ entweder in einer Atmosphäre, deren Feuchtigkeitsgehalt zwischen 50 und 60% gehalten wird, oder durch ein Alkalicarbonat $A_2CO_3$ zu hydrolysieren.

2.  Verfahren nach Anspruch 1, **dadurch gekennzeichnet, dass** $TiOCl_2$ in Form einer wässrigen $TiOCl_2$*yHCl-Lösung vorliegt.

3.  Verfahren nach Anspruch 2, **dadurch gekennzeichnet, dass** die HCl-Konzentration der Lösung etwa 2 M beträgt.

4.  Verfahren nach Anspruch 2, **dadurch gekennzeichnet, dass** die $TiOCl_2$*yHCl-Konzentration zwischen 4 M und 5,5 M beträgt.

5.  Verfahren nach Anspruch 2, **dadurch gekennzeichnet, dass** die $TiOCl_2$*yHCl-Lösung bei Umgebungstemperatur über einem $H_2SO_4$/$H_2O$-Gemisch angeordnet wird, und zwar in derartigen jeweiligen Mengen, dass die relative Feuchtigkeit 50 bis 60% beträgt, und während etwa 5 Wochen damit in Kontakt gelassen wird.

6.  Verfahren nach Anspruch 1, **dadurch gekennzeichnet, dass** eine $TiOCl_2$*yHCl-Lösung und ein Alkalicarbonat $A_2CO_3$ in derartigen jeweiligen Mengen, dass das Verhältnis Ti/A = 4 ± 0,5, bei Umgebungstemperatur miteinander in Kontakt gebracht werden und während 48 bis 72 Stunden in Kontakt gelassen werden.

7.  Verfahren nach Anspruch 6, **dadurch gekennzeichnet, dass** Ti/A = 4 ± 0,1.

8.  Titan-aquo-oxo-chlorid, das gemäß dem Verfahren nach Anspruch 1 in Form von Kristallen gewonnen werden kann, welche die folgende Massenzusammensetzung aufweisen: Ti 26,91%, Cl 21, 36%, H 4, 41%, was der Formel $[Ti_8O_{12}(H_2O)_{24}]Cl_8$*HCl*$7H_2O$ entspricht, **dadurch gekennzeichnet, dass** es eine monokline Struktur, Parameter der monoklinen Zelle von a = 20,3152 (11) Å, b = 11,718 (7) Å, c = 24,2606 (16) Å, β = 111,136 (7)° und die Symmetriegruppe Cc aufweist.

9.  Titan-aquo-oxo-chlorid in Form von Kristallen nach Anspruch 8, **dadurch gekennzeichnet, dass** es aus monodispersen Partikeln in einem polaren Lösemittel gebildet ist.

10. Titan-aquo-oxo-chlorid nach Anspruch 9, **dadurch gekennzeichnet, dass** die Partikel einen hydrodynamischen Durchmesser aufweisen, der um 2,2 nm zentriert ist.

11. Titan-aquo-oxo-chlorid nach Anspruch 8, **dadurch gekennzeichnet, dass** es in Form eines dünnen Films auf einem Substrat vorliegt.

12. Titan-aquo-oxo-chlorid nach Anspruch 11, **dadurch gekennzeichnet, dass** das Substrat Glas ist.

13. Halbleiterelement, **dadurch gekennzeichnet, dass** es aus einem Titan-aquo-oxo-chlorid nach einem der Ansprüche 11 oder 12 besteht.

14. Verfahren zur Reinigung von Luft durch Photokatalyse, **dadurch gekennzeichnet, dass** der Katalysator ein Titan-aquo-oxo-chlorid nach einem der Ansprüche 11 oder 12 ist.

15. Verfahren zur Reinigung von wässrigen Abwässern durch Photokatalyse, **dadurch gekennzeichnet, dass** der Katalysator ein Titan-aquo-oxo-chlorid nach einem der Ansprüche 11 oder 12 ist.

**Claims**

1.  A method for preparing titanium aquo-oxo chloride, **characterised in that** it consists in the hydrolysis of $TiOCl_2$ either in an atmosphere in which the moisture content is maintained between 50% and 60% or by an alkaline

carbonate $A_2CO_3$.

2. The method according to claim 1, **characterised in that** $TiOCl_2$ is in the form of a $TiOCl_2*yHCl$ aqueous solution.

3. The method according to claim 2, **characterised in that** the HCl concentration of the solution is approximately 2 M.

4. The method according to claim 2, **characterised in that** the $TiOCl_2*yHCl$ concentration is between 4 M and 5.5 M.

5. The method according to claim 2, **characterised in that** the $TiOCl_2*yHCl$ solution is placed above an $H_2SO_4/H_2O$ mixture at ambient temperature in respective quantities such that the relative humidity is approximately 50% to 60% and is left in contact for approximately 5 weeks.

6. The method according to claim 1, **characterised in that** a $TiOCl_2*yHCl$ solution and an alkaline carbonate $A_2CO_3$ are brought together at ambient temperature in respective quantities such that the Ti/A ratio = $4\pm0.5$ and are left in contact for 48 to 72 hours.

7. The method according to claim 6, **characterised in that** Ti/A = $4\pm0.1$.

8. A titanium aquo-oxo chloride able to be obtained in the form of crystals according to the method of claim 1, having the following mass composition: Ti 26.91%, Cl 21.36%, H 4.41%, which corresponds to the formula $[Ti_8O_{12}(H_2O)_{24}]Cl_8*HCl*7H_2O$, **characterised in that** it has a monoclinic structure, with the parameters of the monoclinic cell being a = 20.3152 (11) Å, b = 11.718 (7) Å, c = 24.2606 (16) Å, $\beta$ = 111.136 (7)°, and the symmetry group being Cc.

9. The titanium aquo-oxo chloride in the form of crystals according to claim 8, **characterised in that** it is formed by monodisperse particles in a polar solvent.

10. The titanium aquo-oxo chloride according to claim 9, **characterised in that** the hydrodynamic diameter of said particles is centred around 2.2 nm.

11. The titanium aquo-oxo chloride according to claim 8, **characterised in that** it is in the form of a thin film on a substrate.

12. The titanium aquo-oxo chloride according to claim 11, **characterised in that** said substrate is glass.

13. A semi-conductive element, **characterised in that** it is made up of a titanium aquo-oxo chloride according to claim 11 or 12.

14. A method for purifying air by photocatalysis, **characterised in that** the catalyst is a titanium aquo-oxo chloride according to claim 11 or 12.

15. A method for purifying aqueous effluents by photocatalysis, **characterised in that** the catalyst is a titanium aquo-oxo chloride according to claim 11 or 12.

## Fig. 1

## Fig. 2

A                                    B

Fig. 3

| | 1 | 1,3 | 1,7 | 2,2 | 2,9 | 3,8 | 5 | 6,5 | 8,5 | 11 | 14,4 | 18,8 | 24,6 | 32,1 | 41,9 | 54,8 | 71,5 |
|---|---|---|---|---|---|---|---|---|---|---|---|---|---|---|---|---|---|
| □ S1 | 0 | 0 | 0 | 74,3 | 22,5 | 0 | 0 | 0 | 0 | 0 | 0 | 0 | 0 | 0 | 0 | 0 | 0 |
| ■ S2 | 0 | 0 | 0 | 98,8 | 0 | 0 | 0 | 0 | 0 | 0 | 0 | 0 | 0 | 0 | 0 | 0 | 0 |

D (nm)

Fig. 4

Fig. 5

Fig. 6

$2\theta$ (°)

Fig. 7

Fig. 8

2θ (°)

Fig. 9

Fig. 10

Fig. 11

Fig. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **REICHMANN et al.** *Acta Cryst.,* 1987, vol. C43, 1681-1683
- **J. M. BARBET ; P. DENIARD ; R. BREC.** Treatment of Inel X-ray Curve Detector Powder Diffraction Data : Chains Program and Experimental Results. *PROLIX*
- **M. EVAIN.** A Cell Parameter Program. *U-FIT,* 1992